# EUROPEAN PATENT APPLICATION

(11) **EP 2 991 214 A2**
(43) Date of publication of application: **02.03.2016**
(21) Application number: 15179137.3
(22) Date of filing: 30.07.2015
(51) Int. Cl.: H02M 3/07

(54) **POWER CONVERTER USING CHARGE PUMP DIVIDER AND METHOD THEREFOR**

(30) Priority: 31.07.2014 US 201414448388
(71) Applicant: Semiconductor Components Industries, LLC, Phoenix, AZ 85008 (US)
(72) Inventor: VOORWINDEN, Cornelis, 31270 Frouzins (FR)
(74) Representative: Clarke, Geoffrey Howard

(57) **Abstract**

A power converter uses a charge pump divider that includes a capacitive divider core and a phase clock generator. The capacitive divider core has an input for receiving an input voltage and an output for providing an output voltage. In a first phase the capacitive divider core is adapted to couple a flying capacitor in series with an output capacitor. In a second phase the capacitive divider core is adapted to couple the flying capacitor in parallel with the output capacitor. The phase clock generator activates a first phase clock indicating the first phase when a flying voltage across the flying capacitor is less than a predetermined portion of the input voltage minus a peak voltage, and subsequently activates a second phase clock indicating the second phase when the flying voltage exceeds the predetermined portion of the input voltage plus the peak voltage.

## Description

The present disclosure relates generally to power conversion circuits, and more particularly to power converters using charge pump converters.

Modern portable electronic products use to a wide extent rechargeable batteries to power internal circuitry. Smaller devices such as compact cameras, cellular telephones and phablets can use battery packs that are based on single-cell batteries that provide a direct current (DC) voltage over a range of, for example, 2.5 to 4.5 volts (V). In these devices the battery pack voltage can be used to drive an integrated circuit chipset directly. However larger mobile devices such as high-end digital still cameras, tablets and laptop computers require the use of battery packs with multiple battery cells for high current requirements. These cells can be configured in parallel, in series or "stacked", or as a combination of the two. The resulting battery packs generate a higher voltage in the range of, for example, 5V and 9V. The higher voltages are primarily used to power the larger displays, internal disk drivers, DVD drives, and the like. As a consequence however, in these larger devices, the chipset can no longer be powered directly from the battery pack and the higher battery voltage must to be reduced. Thus these devices typically use DC-DC buck converters to reduce the higher battery voltage to a level more suitable for powering integrated circuits.

Moreover in order to preserve the limited battery life, these devices implement various screen-saving and power-saving modes. These different modes have caused the load conditions seen by the DC-DC converters (usually measured in terms of load current) to vary over a large range, possibly spanning up to three orders of magnitude or more. Because of the need to preserve battery life, the DC-DC converters need to be as efficient as possible under the widely varying load conditions.

According to a first embodiment of the present invention there is provided a power converter using a charge pump divider comprising: a capacitive divider core having an input for receiving an input voltage and an output for providing an output voltage, wherein in a first phase said capacitive divider core is adapted to couple a flying capacitor in series with an output capacitor, and in a second phase said capacitive divider core is adapted to couple said flying capacitor in parallel with said output capacitor; and a phase clock generator that activates a first phase clock indicating said first phase when a flying voltage across said flying capacitor is less than a predetermined portion of said input voltage minus a peak voltage, and subsequently activates a second phase clock indicating said second phase when said flying voltage exceeds said predetermined portion of said input voltage plus said peak voltage.

Preferably the power converter has said capacitive divider core comprising: a first switch having a first terminal for receiving said input voltage, a second terminal adapted to connect to a first terminal of said flying capacitor, and a control terminal for receiving said first phase clock; a second switch having a first terminal coupled to said second terminal of said first switch, a second terminal for providing said output voltage, and a control terminal for receiving said second phase clock; a third switch having a first terminal for receiving a reference voltage, a second terminal adapted to connect to a second terminal of said flying capacitor, and a control terminal for receiving said second phase clock; and a fourth switch having a first terminal coupled to said second terminal of said third switch, a second terminal coupled to said second terminal of said second switch, and a control terminal for receiving said first phase clock.

Preferably the power converter includes said first, second, third, and fourth switches comprise N-channel MOS transistors.

Preferably the power converter includes a flying capacitor having a value which is approximately equal to a value of said output capacitor, and said predetermined portion is equal to approximately one-half.

Preferably the power converter said second phase clock is non-overlapping with respect to said first phase clock.

More preferably, the power converter includes said phase clock generator comprises: a comparator having a positive input for receiving said flying voltage, a negative input, and an output for providing said second phase clock; a switch having a common terminal coupled to said negative input of said comparator, a first throw for receiving said predetermined portion of said input voltage plus said peak voltage, a second throw for receiving said predetermined portion of said input voltage minus said peak voltage, and a control terminal coupled to said output of said comparator; and an inverter having an input coupled to said output of said comparator, and an output for providing said first phase clock.

More preferably the power converter further comprises: a summing device having a first input for receiving a predetermined voltage, a second input, and an output for providing said peak voltage; and a noise source having an output for providing a noise voltage that varies in an uncorrelated fashion with respect to said first phase clock and said second phase clock.

More preferably the power converter comprises noise source comprises a random noise generator.

More preferably the power converter comprises the power converter said noise source comprises a deterministic noise generator.

More preferably the integrated circuit power converter using a charge pump divider further comprises: a first terminal adapted to receive an input voltage; a second terminal adapted to provide an output voltage; a third terminal adapted to be coupled to a reference voltage terminal; a fourth terminal adapted to be coupled to a first terminal of a flying capacitor; a fifth terminal adapted to be coupled to a second terminal of said flying capacitor; a capacitive divider core coupled to said first, second, third, fourth, and fifth terminals, wherein in a first phase said capacitive divider core is adapted to couple said first terminal to said fourth terminal and said fifth terminal to said second terminal, and during a second phase to couple said third terminal to said fifth terminal and said fourth terminal to said second terminal; and a phase clock generator for activating said capacitive divider core to operate in said first phase when a flying voltage between said fourth and fifth terminals is less than a predetermined portion of said input voltage minus a peak voltage, and subsequently activates said capacitive divider core to operate in said second phase when said flying voltage exceeds said predetermined portion of said input voltage plus said peak voltage.

More preferably an embodiment of the invention includes an integrated circuit power converter using a power converter as described above, the integrated circuit power converter further comprising: a first terminal adapted to receive said input voltage; a second terminal adapted to provide said output voltage; a third terminal adapted to be coupled to a reference voltage terminal; a fourth terminal adapted to be coupled to a first terminal of said flying capacitor; and a fifth terminal adapted to be coupled to a second terminal of said flying capacitor, wherein said capacitive divider core is coupled to said first, second, third, fourth, and fifth terminals, wherein in said first phase said capacitive divider core is adapted to couple said first terminal to said fourth terminal and said fifth terminal to said second terminal, and during said second phase to couple said third terminal to said fifth terminal and said fourth terminal to said second terminal.

Preferably the integrated circuit power converter includes said capacitive divider core comprises: a first switch having a first terminal for receiving said input voltage, a second terminal adapted to connect to a first terminal of said flying capacitor, and a control terminal for receiving a first phase clock indicative of said first phase; a second switch having a first terminal coupled to said second terminal of said first switch, a second terminal for providing said output voltage, and a control terminal for receiving a second phase clock indicative of said second phase; a third switch having a first terminal coupled to said reference voltage terminal, a second terminal adapted to connect to a second terminal of said flying capacitor, and a control terminal for receiving said second phase clock; and a fourth switch having a first terminal coupled to said second terminal of said third switch, a second terminal coupled to said second terminal of said second switch, and a control terminal for receiving said first phase clock.

Preferably the integrated circuit power converter described above in which said first, second, third, and fourth switches comprise N-channel MOS transistors.

Preferably the integrated circuit power converter described above and wherein said second terminal is further adapted to be coupled to a first terminal of an output capacitor, a size of said flying capacitor is approximately equal to a size of said output capacitor and said predetermined portion is equal to approximately one-half.

Preferably the integrated circuit power converter described above wherein said second phase clock is non-overlapping with respect to said first phase clock.

Preferably the integrated circuit power converter of claim 10, wherein said phase clock generator comprises: a comparator having a positive input for receiving said flying voltage, a negative input, and an output for providing a second phase clock indicative of said second phase; a switch having a common terminal coupled to said negative input of said comparator, a first throw for receiving said predetermined portion of said input voltage plus said peak voltage, a second throw for receiving said predetermined portion of said input voltage minus said peak voltage, and a control terminal coupled to said output of said comparator; and an inverter having an input coupled to said output of said comparator, and an output for providing a first phase clock indicative of said first phase.

Preferably the integrated circuit power converter as described above, further comprising: a summing device having a first input for receiving a predetermined voltage, a second input, and an output for providing said peak voltage; and a noise source having an output for providing a noise voltage that varies in an uncorrelated fashion with respect to a first phase clock indicative of said first phase and a second phase clock indicative of said second phase.

In another embodiment of the present invention there is provided a method comprising: receiving an input voltage on an input terminal; coupling a first terminal of a flying capacitor to said input terminal and a second terminal of said flying capacitor to a first terminal of an output capacitor during a first phase; coupling said second terminal of said flying capacitor to a voltage reference terminal and said first terminal of said flying capacitor to said first terminal of said output capacitor during a second phase; starting said first phase when a flying voltage across said flying capacitor is less than a predetermined portion of said input voltage minus a peak voltage; and ending said first phase and subsequently starting said second phase when said flying voltage exceeds said predetermined portion of said input voltage plus said peak voltage.

Preferably the method, further comprises: repeating starting said first phase and subsequently starting said second phase continuously during a normal operation mode.

Preferably the method, further comprises: adding a noise voltage to a predetermined voltage to obtain said peak voltage.

Yet more preferably the method starting said first phase, and ending said first phase and subsequently starting said second phase further comprises: comparing said flying voltage to a second voltage; and generating said second voltage to alternately be approximately equal to said predetermined portion of said input voltage plus said peak voltage during said first phase, and said predetermined portion of said input voltage minus said peak voltage during said second phase.

### BRIEF DESCRIPTION OF THE DRAWINGS

The present disclosure may be better understood, and its numerous features and advantages made apparent to those skilled in the art by referencing the accompanying drawings, in which:
FIG. 1 illustrates a graph of the efficiency of a capacitive divider known in the prior art versus load current;
FIG. 2 illustrates a graph of the efficiency of an inductive buck converter known in the prior art versus load current;
FIG. 3 illustrates in partial block diagram and partial schematic form a charge pump divider according to an embodiment of the present invention;
FIG. 4 illustrates in partial block diagram and partial schematic form a diagram showing the operation of the charge pump divider of FIG. 3 during a first phase;
FIG. 5 illustrates in partial block diagram and partial schematic form a diagram showing the operation of the charge pump divider of FIG. 3 during a second phase;
FIG. 6 illustrates a timing diagram of voltages relevant to the operation of the charge pump divider of FIG. 3;
FIG. 7 illustrates in block diagram form a frequency control circuit for use in the phase clock generator of FIG. 3;
FIG. 8 illustrates in partial block diagram and partial schematic form a power converter using an integrated circuit based on the charge pump divider of FIG. 3; and
FIG. 9 illustrates a graph of the relative efficiencies of the charge pump divider of FIG. 1, the inductive buck converter of FIG. 2, and the charge pump divider of FIG. 3 versus load current; and
FIG. 10 illustrates in block diagram form a frequency spreading circuit that can be added to the clock management block of FIG. 8 to reduce EMI.

The use of the same reference symbols in different drawings indicates similar or identical items. Unless otherwise noted, the word "coupled" and its associated verb forms include both direct connection and indirect electrical connection by means known in the art, and unless otherwise noted any description of direct connection implies alternate embodiments using suitable forms of indirect electrical connection as well.

### DETAILED DESCRIPTION

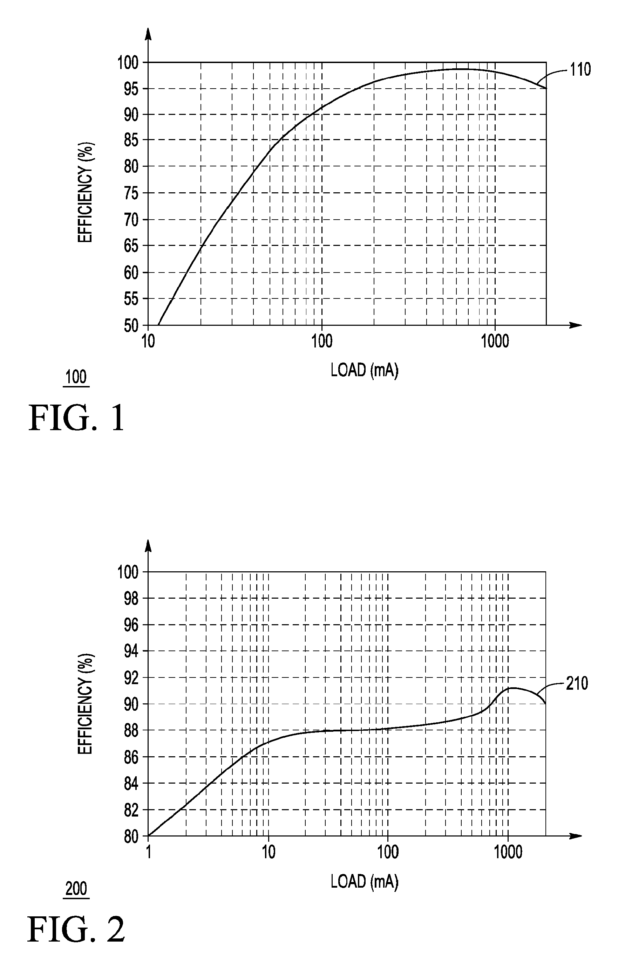

FIG. 1 illustrates a graph 100 of the efficiency of a charge pump divider known in the prior art versus load current. In FIG. 1 the horizontal axis represents load current in milliAmperes (mA) using a logarithmic scale, and the vertical axis represents efficiency in percentage using a linear scale. A waveform 110 represents the efficiency of a typical charge pump converter using a divide-by-2 architecture versus load current. At higher load currents, such as 100 mA to over 1 A, efficiency is relatively high, peaking at about 98% at around 400-500 mA. However as current decreases from the peak, efficiency drops markedly, including about 91% at around 100 mA, about 85% at around 50 mA, and about 65% at around 20 mA. Thus the charge pump divider is inefficient in systems that require low power modes. While the charge pump divider has a very high peak efficiency of about 98%, efficiency at low loads is poor.

FIG. 2 illustrates a graph 200 of the efficiency of an inductive buck converter known in the prior art versus load current. In FIG. 2 the horizontal axis represents load current in mA using a logarithmic scale, and the vertical axis represents efficiency in percentage using a linear scale. A waveform 210 represents the efficiency of a typical low voltage inductive buck converter. Efficiency peaks at about 91% at around 1 A, but only decreases slightly as the load decreases, including about 88% at around 100 mA, about 87% at about 10 mA, and about 80% at around 1 mA. While the inductive buck converter has fairly constant efficiency over a wide load range, its peak efficiency is low.

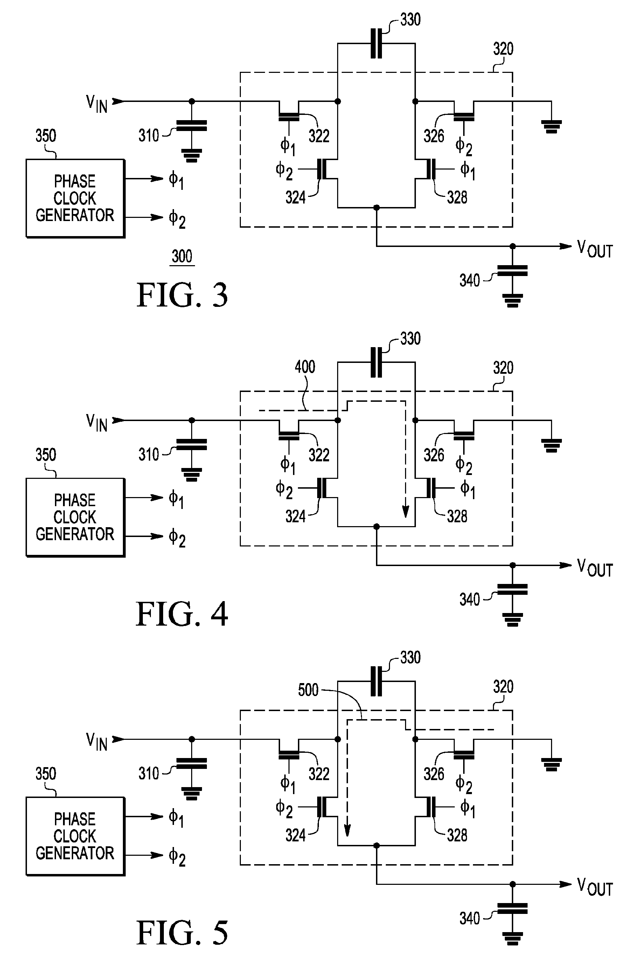

FIG. 3 illustrates in partial block diagram and partial schematic form a charge pump divider 300 according to an embodiment of the present invention. Charge pump divider 300 includes generally an input capacitor 310, a capacitive divider core 320, a flying capacitor 330, an output capacitor 340, and a phase clock generator 350. Input capacitor 310 has a first terminal for receiving an input voltage labeled "V_{IN}", and a second terminal connected to ground. Capacitive divider core 320 includes N-channel metal oxide semiconductor (MOS) transistors 322, 324, 326, and 328. Transistor 322 has a drain for receiving V_{IN}, a gate for receiving a signal labeled "Φ₁", and a source. Transistor 324 has a drain connected to the source of transistor 322, a gate for receiving a signal labeled "Φ₂", and a source for providing a voltage labeled "V_{OUT}". Transistor 326 has a drain, a gate for receiving signal Φ₂, and a source connected to ground. Transistor 328 has a drain connected to the source of transistor 324, a gate for receiving signal Φ₁, and a source connected to the drain of transistor 326. Flying capacitor 330 has a first terminal connected to the source of transistor 322 and the drain of transistor 324, and a second terminal connected to the drain of transistor 326 and the source of transistor 328. Output capacitor 340 has a first terminal connected to the source of transistor 324 and to the drain of transistor 328, and a second terminal connected to ground. Phase clock generator 350 has a first output terminal for providing signal Φ₁, and a second output terminal for providing signal Φ₂.

As will now be explained, charge pump divider 300 is able to operate as a divide-by-two converter having both high peak efficiency and relatively constant efficiency over a wide load range by controlling the frequency of the generation of phase clock signals Φ₁ and Φ₂. The basic operation of charge pump divider 300 will now be explained followed by a description of the operation of phase clock generator 350.

FIG. 4 illustrates in partial block diagram and partial schematic form a diagram showing the operation of the charge pump divider of FIG. 3 during a first phase. The first phase corresponds signal Φ₁ being active at a logic high while signal Φ₂ is inactive at a logic low. During the first phase, transistors 322 and 328 are active and operate as closed switches, while transistors 324 and 326 are inactive and operate as open switches. The circuit path is shown by a dashed arrow 400. Neglecting the parasitic resistances of transistors 322 and 328, capacitors 330 and 340 are connected in series, and assuming they are equal-valued, V_{OUT} will be about one-half of V_{IN}.

FIG. 5 illustrates in partial block diagram and partial schematic form a diagram showing the operation of charge pump divider 300 of FIG. 3 during a second phase. The second phase corresponds signal Φ₁ being inactive at a logic low while signal Φ₂ is active at a logic high. During the second phase, transistors 324 and 326 are active and operate as closed switches, while transistors 322 and 328 are inactive and operate as open switches. The circuit path is shown by a dashed arrow 500. Neglecting the parasitic resistances of transistors 324 and 326, capacitors 330 and 340 are connected in parallel between the node forming V_{OUT} and ground.

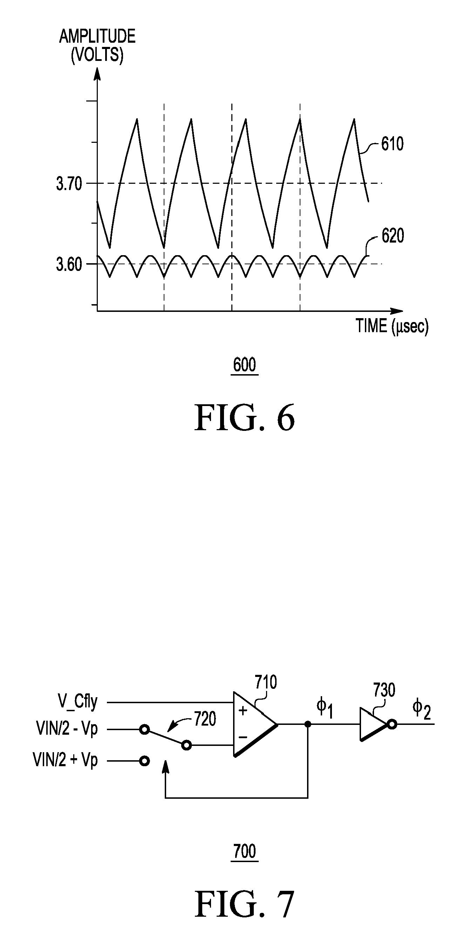

FIG. 6 illustrates a timing diagram 600 of voltages relevant to the operation of charge pump divider 300 of FIG. 3. In FIG. 6, the horizontal axis represents time in microseconds (µsec), while the vertical axis represents the amplitude of relevant signals in volts. Timing diagram 600 shows waveforms of two signals of interest, including a waveform 610 that represents the voltage across flying capacitor 330, and a waveform 620 that represents the voltage across output capacitor 340. In timing diagram 600, input voltage V_{IN} is assumed to be about 7.4 volts (V). In waveform 610, the voltage across flying capacitor 330 has an average value of about 3.7 V but includes a ripple that causes it to vary between about 3.62 V and 3.78 V. The ripple across flying capacitor 330 is a triangular waveform at the switching frequency, and the average (DC) voltage is approximately equal to V_{IN}/2. In waveform 620, the ripple across output capacitor 340 is an asymmetric waveform at twice the switching frequency, and the average (DC) voltage depends on load current and in the illustrated example is about 3.6 V.

Since the output ripple of a fixed frequency charge pump increases with the load, the inventor has discovered that the efficiency of charge pump 300 of FIG. 3 can be improved by varying the switching frequency to obtain a constant peak-to-peak ripple. A circuit for use in phase clock generator 350 that varies the switching frequency to obtain a constant ripple will now be described.

FIG. 7 illustrates in block diagram form a frequency control circuit 700 for use in phase clock generator 350 of FIG. 3. Frequency control circuit 700 includes a comparator 710, a switch 720, and an inverter 730. Comparator 710 has a positive input for receiving a voltage labeled "V_Cfly", a negative input, and an output for providing signal Φ₂. Switch 720 has a first throw for receiving a first voltage labeled "V_{IN}/2 - V_{P}", a second throw for receiving a second voltage labeled "V_{IN}/2 + V_{P}", a common terminal connected to the negative input of comparator 710, and a control input connected to the output of comparator 710 for receiving the Φ₂ signal. Inverter 730 has an input connected to the output of comparator 710, and an output for providing the Φ₁ signal.

Frequency control circuit 700 activates signal Φ₁ at a logic high and provides signal Φ₂ at a logic low when V_Cfly is less than V_{IN}/2 - V_{P}. When signal Φ₂ goes low, switch 720 switches the V_{IN}/2 + V_{P} reference voltage to the negative input of comparator 710. During this phase flying capacitor 330 is connected in series with output capacitor 340 and the voltage across flying capacitor 330 increases. When V_Cfly exceeds V_{IN}/2 + V_{P}, frequency control circuit 700 activates signal Φ₂ at a logic high and provides signal Φ₁ at a logic low. When signal Φ₂ goes high, switch 720 switches the V_{IN}/2 - V_{P} reference voltage to the negative input of comparator 710. During this phase flying capacitor 330 is connected in parallel with output capacitor 340 and the voltage across flying capacitor 330 decreases. When V_Cfly is less than V_{IN}/2 - V_{P}, frequency control circuit 700 again activates signal Φ₁ at a logic high and provides signal Φ₂ at a logic low, repeating the sequence. In this manner, the switching frequency of the phase clock generator will adapt to the size of the load. Accordingly, for a higher load (larger slope of the ripple on V_{OUT}), the switching frequency increases and for a smaller load (smaller slope of the ripple on V_{OUT}), the switching frequency decreases.

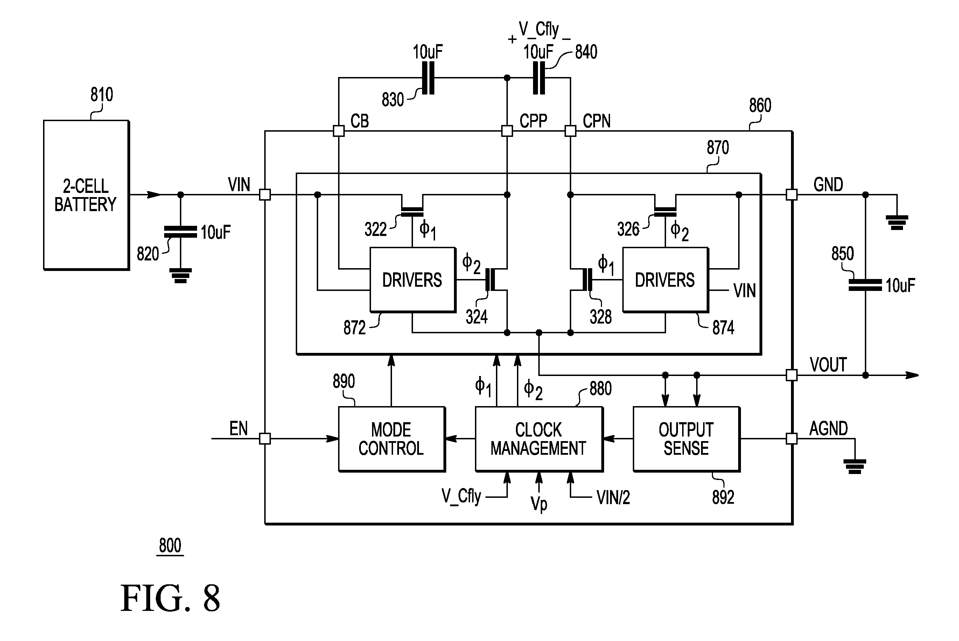

FIG. 8 illustrates in partial block diagram and partial schematic form a power converter 800 using an integrated circuit 860 based on charge pump divider 300 of FIG. 3. Power converter 800 includes generally a two-cell battery 810, an input capacitor 820, a boost capacitor 830, a flying capacitor 840, and an output capacitor 850 all connected to an integrated circuit 860 in a manner that will be described as follows. Two-cell battery 810 has a positive output terminal connected to an integrated circuit terminal labeled "VIN". Input capacitor 820 has a first terminal connected to the VIN terminal, and a second terminal connected to ground. Boost capacitor 830 has a first terminal connected to an integrated circuit terminal labeled "CB", and a second terminal connected to an integrated circuit terminal labeled "CPP". Flying capacitor 840 has a first terminal connected to the CPP terminal, and a second terminal connected to an integrated circuit terminal labeled "CPN". Output capacitor 850 has a first terminal connected to an integrated circuit terminal labeled "GND" that is connected to ground, and a second terminal connected to an integrated circuit terminal labeled "VOUT" that provides the output voltage. Integrated circuit 860 also has an enable terminal labeled "EN" for receiving an externally supplied enable signal, and an analog ground terminal labeled "AGND" connected to an analog ground voltage terminal.

Integrated circuit 860 includes generally a capacitive divider core 870, a clock management block 880, a mode control block 890, and an output sense block 892. Capacitive divider core 870 includes transistors 322, 324, 326, and 328 labeled the same as corresponding elements in FIG. 3 and connected as described with respect to FIG. 3. Capacitive divider core 860 has terminals connected to the VIN and GND terminals of integrated circuit 860, terminals connected to the CPP and CPN terminals for connection to external flying capacitor 840, a terminal connected to the CB terminal, input terminals for receiving the Φ₁ and Φ₂ clock signals, and an output terminal for providing an output voltage to the VOUT terminal. In addition to the transistors described in FIG. 3, capacitive divider core 870 includes a set of drivers 872 for buffering clock signals Φ₁ and Φ₂ and providing similarly labeled buffered drive signals to the gates of transistors 322 and 324, respectively, and a set of drivers 874 for buffering clock signals Φ₁ and Φ₂ and providing similarly labeled buffered drive signals to the gates of transistors 328 and 326, respectively. Drivers 872 and 874 are used to buffer signals Φ₁ and Φ₂ from phase clock generator 880 to drive the gates of transistors 322, 324, 326, and 328, which are relatively large integrated MOS transistors with high gate capacitances.

Integrated circuit 860 also includes additional features useful for forming a practical integrated circuit charge pump divider that can be adapted for different environments. For example, in order to raise the gate voltage of transistor 322 to a high enough level, a voltage greater than VIN is generated by means of the bootstrap capacitor connected between terminals CPP and CB. Integrated circuit 860 also includes a mode control block 890 used to enable the operation of capacitive divider core 870 or to place it in a low power mode based on the state of the EN terminal, and an output sense block 892 used for shutdown control in the case of an output fault. In addition, integrated circuit 860 includes circuitry that provides the V_CFLY, V_{P}, and V_{IN}/2 voltages to clock management circuit 880 that is not shown in FIG. 8.

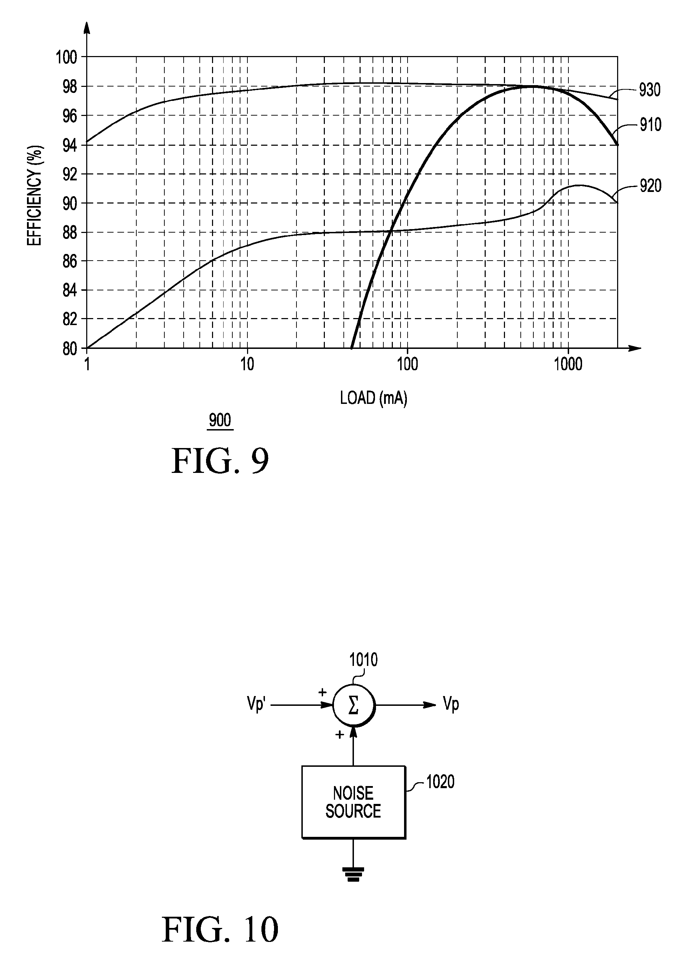

FIG. 9 illustrates a graph of the relative efficiencies of the charge pump divider of FIG. 1, the inductive buck converter of FIG. 2, and the charge pump divider of FIG. 3 versus load current. In FIG. 9 the horizontal axis represents load current in mA using a logarithmic scale, and the vertical axis represents efficiency in percentage using a linear scale. A waveform 910 represents the efficiency of the known charge pump divider divider as previously shown in FIG. 1, a waveform 920 represents the efficiency of the known inductive buck converter as shown in FIG. 2, and a waveform 930 represents the efficiency of charge pump divider 300 of FIG. 3, all superimposed on common axes. As can be readily seen from FIG. 9, charge pump divider 300 of FIG. 3 has about the same high peak efficiency as the capacitive divider of FIG. 1, but also maintains near-peak efficiency over a wide load range similar to the inductive buck converter of FIG. 2. Thus charge pump divider 300 avoids the disadvantages of both architectures and is suitable for use in such applications as dual-cell portable devices that operate over very wide load ranges.

The power converter built on the architecture of charge pump divider 300 of FIG. 3 is self-oscillating and the choice of a value for flying capacitor 330 will only affect the frequency and thus overall efficiency but not on the DC level and quality of VOUT. In some embodiments, it may be useful to limit the lower end of the self-oscillating frequency range to stay out of the audible frequency range, while degrading efficiency somewhat. In some embodiments, it is desirable to reduce electromagnetic interference (EMI) as well.

FIG. 10 illustrates in block diagram form a frequency spreading circuit 1000 that can be added to clock management block 880 of FIG. 8 to reduce EMI. Frequency spreading circuit 1000 includes a summing device 1010 and a noise source 1020. Summing device 1010 has a first input for receiving an input peak voltage labeled "V_{P}"', a second input, and an output for providing signal V_{P}. Noise source 1020 is connected to ground and has an output connected to the second input of summing device 1010 for providing a noise signal thereto. Noise source 1020 injects random noise having an average value of 0 V into the peak ripple voltage signal V_{P}' so that the output of summing device 1010 has an average value of V_{P}' but varies randomly within a range. Noise source 1020 varies the reference level of comparator 710, causing the actual switching frequency to vary. In this way, frequency spreading circuit 1000 introduces a jitter into the switching frequency of charge pump divider 300 to spread the emitted EMI over a frequency range proportional to the frequency range of the noise signal. The noise source may also be pseudo-random, produce shaped noise or a defined waveform shape.

The above-disclosed subject matter is to be considered illustrative, and not restrictive, and the appended claims are intended to cover all such modifications, enhancements, and other embodiments that fall within the true scope of the claims. For example in other embodiments, an integrated circuit charge pump divider can include different peripheral circuits to enable different operating modes, or remove certain features that are not needed for application-specific products. Moreover the generation of the Φ₁ and Φ₂ signals could be accomplished using two comparators each receiving a fixed threshold rather than by shared comparator 710 used in frequency control circuit 700 of FIG. 2. Also while capacitive divider core 320 was shown as being constructed using only N-channel MOS transistors, in other embodiments it could also be formed with only P-channel transistors or with a combination of P-channel transistors and N-channel transistors. The substitution of a P-channel transistor for N-channel transistor 322 avoids the need for bootstrap capacitor 830, connected between terminals CB and CPP. Moreover input capacitor 820 can alternatively be connected between VIN and VOUT, which may improve the hot-plug robustness and may reduce output voltage ripple.

Thus, to the maximum extent allowed by law, the scope of the present invention is to be determined by the broadest permissible interpretation of the following claims and their equivalents, and shall not be restricted or limited by the foregoing detailed description.

## Claims

1. A power converter using a charge pump divider (300) comprising:
a capacitive divider core (320) having an input for receiving an input voltage and an output for providing an output voltage, wherein in a first phase said capacitive divider core (320) is adapted to couple a flying capacitor (330) in series with an output capacitor (340), and in a second phase said capacitive divider core (320) is adapted to couple said flying capacitor (330) in parallel with said output capacitor (340); an
a phase clock generator (350) that activates a first phase clock indicating said first phase when a flying voltage across said flying capacitor (330) is less than a predetermined portion of said input voltage minus a peak voltage, and subsequently activates a second phase clock indicating said second phase when said flying voltage exceeds said predetermined portion of said input voltage plus said peak voltage.

2. The power converter (300) of claim 1, wherein said capacitive divider core (320) comprises:
a first switch (322) having a first terminal for receiving said input voltage, a second terminal adapted to connect to a first terminal of said flying capacitor (330), and a control terminal for receiving said first phase clock;
a second switch (324) having a first terminal coupled to said second terminal of said first switch (322), a second terminal for providing said output voltage, and a control terminal for receiving said second phase clock;
a third switch (326) having a first terminal for receiving a reference voltage, a second terminal adapted to connect to a second terminal of said flying capacitor (330), and a control terminal for receiving said second phase clock; and
a fourth switch (328) having a first terminal coupled to said second terminal of said third switch (326), a second terminal coupled to said second terminal of said second switch, and a control terminal for receiving said first phase clock.

3. The power converter (300) of claim 2, wherein said first (322), second (324), third (326), and fourth (328) switches comprise N-channel MOS transistors.

4. The power converter (300) of claim 2, wherein a value of said flying capacitor (330) is approximately equal to a value of said output capacitor (340), and said predetermined portion is equal to approximately one-half.

5. The power converter (300) of claim 1, wherein said second phase clock is non-overlapping with respect to said first phase clock.

6. The power converter (300) of claim 1, wherein said phase clock generator (350) comprises:
a comparator (710) having a positive input for receiving said flying voltage, a negative input, and an output for providing said second phase clock;
a switch (720) having a common terminal coupled to said negative input of said comparator (710), a first throw for receiving said predetermined portion of said input voltage plus said peak voltage, a second throw for receiving said predetermined portion of said input voltage minus said peak voltage, and a control terminal coupled to said output of said comparator (710); and
an inverter (730) having an input coupled to said output of said comparator (710), and an output for providing said first phase clock.

7. The power converter (300) of claim 1, further comprising:
a summing device (1010) having a first input for receiving a predetermined voltage, a second input, and an output for providing said peak voltage; and
a noise source (1020) having an output for providing a noise voltage that varies in an uncorrelated fashion with respect to said first phase clock and said second phase clock.

8. The power converter (300) of claim 7, wherein said noise source (1020) comprises a random noise generator.

9. The power converter (300) of claim 7, wherein said noise source (1020) comprises a deterministic noise generator.

10. An integrated circuit power converter (860) using the power converter (300) of any of claims 1-9, the integrated circuit power converter (860) further comprising:
a first terminal adapted to receive said input voltage;
a second terminal adapted to provide said output voltage;
a third terminal adapted to be coupled to a reference voltage terminal;
a fourth terminal adapted to be coupled to a first terminal of said flying capacitor; and
a fifth terminal adapted to be coupled to a second terminal of said flying capacitor,
wherein said capacitive divider core (320/870) is coupled to said first, second, third, fourth, and fifth terminals, wherein in said first phase said capacitive divider core (320) is adapted to couple said first terminal to said fourth terminal and said fifth terminal to said second terminal, and during said second phase to couple said third terminal to said fifth terminal and said fourth terminal to said second terminal.

11. A method comprising:
receiving an input voltage on an input terminal;
coupling a first terminal of a flying capacitor (330) to said input terminal and a second terminal of said flying capacitor (330) to a first terminal of an output capacitor (340) during a first phase;
coupling said second terminal of said flying capacitor (330) to a voltage reference terminal and said first terminal of said flying capacitor (330) to said first terminal of said output capacitor (340) during a second phase;
starting said first phase when a flying voltage across said flying capacitor (330) is less than a predetermined portion of said input voltage minus a peak voltage; and
ending said first phase and subsequently starting said second phase when said flying voltage exceeds said predetermined portion of said input voltage plus said peak voltage.

12. The method of claim 11, further comprising:
repeating starting said first phase and subsequently starting said second phase continuously during a normal operation mode.

13. The method of claim 11, further comprising:
adding a noise voltage to a predetermined voltage to obtain said peak voltage.

14. The method of claim 11 wherein starting said first phase, and ending said first phase and subsequently starting said second phase comprise:
comparing said flying voltage to a second voltage; and
generating said second voltage to alternately be approximately equal to said predetermined portion of said input voltage plus said peak voltage during said first phase, and said predetermined portion of said input voltage minus said peak voltage during said second phase.
